# EUROPEAN PATENT APPLICATION

(11) **EP 4 297 210 A1**
(43) Date of publication of application: **27.12.2023**
(21) Application number: 23180128.3
(22) Date of filing: 19.06.2023
(51) Int. Cl.: H02G 3/04, B60L 53/30, H02G 9/04, H02G 9/06

(54) **ELECTRIC VEHICLE CHARGER**

(30) Priority: 20.06.2022 DK PA202270332; 30.03.2023 DK PA202370159; 30.03.2023 DK PA202370160
(71) Applicant: Elby ApS, 2740 Skovlunde (DK)
(72) Inventor: BOESEN, Michael Reibel, 2740 Skovlunde (DK); THOMSEN, Martin, 2300 Copenhagen S (DK); KØHLER, Lars, 1658 Copenhagen V (DK)
(74) Representative: Guardian IP Consulting I/S

(57) **Abstract**

The electric vehicle charger (1) has a housing (2) and is adapted to be arranged at a roadside and/or at a parking space (3). The electric vehicle charger is adapted to provide electrical connection to an electric vehicle (4) for charging the vehicle and includes a cable rail (16) arranged in a groove (17) of a pavement (18) and forming an inner cable receiving channel (20). Inner walls (21) of the channel are provided with respective restrictions (22) at upper edges thereof. A restricted insertion space (23) formed between the restrictions has a minimum width (w) being smaller than a maximum width (W) between the inner walls of the inner cable receiving channel.

## Description

The present invention relates to an electric vehicle charger (EV charger) having a housing and being adapted to be arranged at a roadside and/or at a parking space, the electric vehicle charger being adapted to provide electrical connection to an electric vehicle for charging the vehicle, wherein the electric vehicle charger includes a cable rail adapted to be arranged in a groove of a pavement so that the cable rail is at least substantially flush with a surface of the pavement, wherein the cable rail forms an inner cable receiving channel being open in upward direction for insertion of an electric vehicle charging cable, and wherein the inner cable receiving channel has a maximum width between inner walls of the inner cable receiving channel.

GB 2572752 A discloses an on-street charging connection from power in a building to a parked vehicle without causing an obstruction to pedestrians or restricting access to vehicle doors. The charging connection has a cable in a conduit beneath the pavement and a flying lead through curb stones. The cable and flying lead may be continuous, or have connectors. The flying lead can be stowed in the curb stone, or the cable pass through a longitudinal cavity to an adjacent curb-stone. The conduit can be enclosed, or have a top cover flush with the sidewalk. However, this charging connection may be cumbersome to arrange in existing pavements due to the need for digging in order to draw the cable underground from inside the building, under the pavement and to the curb stone. Furthermore, custom-made hollow curb stones through which the flying lead may extend are required for the arrangement of the cabling at the roadside.

The object of the present invention is to provide an electric vehicle charger being easier to install than existing solutions and taking up little space in public area.

In view of this object, the inner walls are provided with respective restrictions at upper edges thereof, and a restricted insertion space is formed between the restrictions and has a minimum width being smaller than the maximum width between the inner walls of the inner cable receiving channel.

In this way, in order to charge an electric vehicle, a first end of an electric vehicle charging cable may be connected to the electric vehicle charger and a second end of the electric vehicle charging cable may be connected to the electric vehicle, and the main part of the cable itself may easily be inserted into and thereby stowed away in the inner channel of the cable rail. As a result, the electric vehicle charging cable may not obstruct the free passage of pedestrians on the pavement between the housing of the EV charger and the electric vehicle.

In an embodiment, the restrictions formed at the upper edges of the inner walls are flexible. Due to the restricted insertion space formed between the restrictions at the upper edges of the inner walls of the cable rail, and due to the flexible restrictions, an electric vehicle charging cable having a suitable thickness and/or diameter being at least slightly larger than the minimum width of the restricted insertion space may be inserted into the inner channel by deformation of the restrictions. During charging of the electric vehicle, the cable may be retained inside the inner channel of the cable rail by the restrictions, and the cable may easily be removed from the cable rail when charging is finished. In this way, drivers of electric vehicles may use their own charging cables for connection between the EV charger and their car.

As a result of the present invention, the cable rail arranged in the groove of the pavement provides in itself the possibility of charging an electric vehicle parked at a sidewalk by means of an electric vehicle charger housing located at another side of the sidewalk without obstructing the passage of pedestrians on the sidewalk. No other components than the cable rail need to be installed in the pavement, and therefore, installation of the electric vehicle charger may be facilitated as compared to known solutions.

In an embodiment, the minimum width of the restricted insertion space formed between the restrictions is less than 0.8 times, preferably less than 0.7 times and most preferred less than 0.6 times the maximum width between the inner walls of the inner cable receiving channel.

In a structurally particularly advantageous embodiment, the restrictions formed at the upper edges of the inner walls have the form of flexible flaps adapted to bend flexibly between a straight position in which the flaps extend at least substantially in the direction of each other and a bent position in which at least a part of the flaps are bent at least partly up or down in relation to the upward open inner cable receiving channel.

In an embodiment, the cable rail includes a bottom wall and two opposed side walls, each side wall generally having a minimum wall thickness, and wherein each flexible flap has a maximum wall thickness being smaller than, preferably less than 0.6 times, preferably less than 0.5 times and most preferred less than 0.4 times the minimum wall thickness of each side wall.

In an embodiment, the entire cable rail is formed from an at least slightly flexible material, such as rubber. Thereby, the entire cable rail may be produced as one piece, for instance by extrusion, from the same material, and the restrictions may be flexible. Furthermore, the walls of the cable rail itself may also be flexible, whereby the cable rail may better adapt to imperfections of the groove formed in the pavement. During use, the components of the pavement, such as curb stones and concrete slabs, may move slightly in relation to each other, and it may be advantageous that the cable rail is able to adapt to such variations of the pavement.

In an embodiment, the housing of the electric vehicle charger is arranged in an outer wall of a building, an in that the housing is adapted to provide electrical connection through the outer wall of the building from a power supply inside the building to an electric vehicle parked outside the building. Thereby, the electric vehicle charger may be easy to mount in that no digging may be required. No separate power supply is needed in that an existing power supply inside the building may be utilized. Furthermore, the electric vehicle charger may not take up a lot of space on the pavement or the street.

In an embodiment, the housing of the electric vehicle charger includes a tubular part being generally cylindrical, wherein the tubular part houses charger control electronics and a socket for insertion of a plug of an electric vehicle charging cable, and wherein an electric cable is arranged to connect the power supply inside the building to the electric vehicle charger. Thereby, the mounting of the housing in the outer wall of the building may be facilitated in that a relatively larger hole may be formed in the outer wall in order to insert the tubular part. For instance, a cup drill may be used for drilling the relatively larger hole in the outer wall.

In an embodiment, the generally cylindrical tubular part is fixed in a generally cylindrical hole in an outer part of the outer wall. Thereby, the mounting of the electric vehicle charger may be facilitated in that the relatively larger hole may be formed in an outer part of the outer wall in order to insert the tubular part and a relatively smaller hole may be formed in an inner part of the outer wall in order to insert the electric cable. For instance, a cup drill may be used for drilling the relatively larger hole in the outer part of the outer wall in order to insert the tubular part and a normal drill may be used for drilling the relatively smaller hole in the inner part of the outer wall in order to insert the electric cable.

In an embodiment, the electric cable extends through an inner part of the outer wall at a lower level than a level of the generally cylindrical tubular part. Thereby, the housing of the electric vehicle charger may be arranged in the outer wall of the building and electrical connection may be provided from a power supply inside a basement of the building to the housing of the electric vehicle charger, even without interfering with rooms of the building situated at a level above the basement. Thereby, it may also be ensured that the housing of the electric vehicle charger may be arranged at a convenient height above ground.

In an embodiment, the housing and the socket are arranged at least substantially flush with an outer surface of the outer wall of the building. Thereby, the electric vehicle charger may take up practically no space in public area. Therefore, the electric vehicle charger may be used in urban areas where legislation prohibits mounting the charger in the public area.

In areas with apartment buildings, many EV chargers may be necessary in order to meet the demand. However, in such areas, parking spaces may be scarce, and it may be a challenge to find a free parking space with an EV charger.

Cars circulating in search of available parking spaces is a huge waste of time and money for our society. When we take the resulting pollution into account it is obvious that something must be done.

Therefore, advantageously, the electric vehicle charger capable of assisting drivers of electric vehicles in finding the electric vehicle charger when it is available for use.

In an embodiment, the electric vehicle charger includes at least one sensor adapted to detect the presence or absence of a vehicle or vehicles in the vicinity of the electric vehicle charger.

In this way, the EV charger may, for instance by means of a cloud-based mobile app, provide information to drivers of electric vehicles when the electric vehicle charger is ready for use. The EV charger may be ready for use if an available parking space is detected in the vicinity of the EV charger and the charger is not already in use for charging.

If many electric vehicle chargers according to the present invention are installed in an area or for instance in an entire city, available parking spaces may be monitored and drivers of electric vehicles may be directed to available parking spaces with an associated available charger. In this way, time and resources may be saved.

In an embodiment, the at least one sensor is arranged in the housing of the electric vehicle charger. Thereby, mounting may be greatly facilitated in that only the housing of the electric vehicle charger needs to be mounted suitably in order to arrange both the charger and the sensor. The electric communication between the EV charger and the sensor may be arranged within the housing and therefore, no extra cables may need to be arranged when mounting the EV charger.

In an embodiment, the at least one sensor includes a non-contact distance sensor and/or preferably has the form of a Light Detection and Ranging (LIDAR) device. Thereby, by means of the non-contact distance sensor or the LIDAR device, a free distance in front of the sensor may be measured and compared to a known free distance measured when a vehicle is parked at an associated parking space. If the measured free distance in front of the sensor is substantially larger than said known distance, the parking space may be indicated as available. If a difference between the measured free distance in front of the sensor and said known distance is within a certain interval, in etc. it is relatively small, the parking space may be indicated as not available, i.e. occupied. If the measured free distance in front of the sensor is substantially smaller than said known distance, something may be placed in between the parking space and the sensor. For example, a person or an object may be positioned on a pavement between the parking space and the sensor. In this case, the status of the parking space may be indicated as unknown.

In an embodiment, each upper edge of the inner walls of the inner channel are provided with a number of possibly flexible, layered restrictions arranged above each other. Thereby, retention of an EV charging cable inside the cable rail during charging may be even better ensured while still facilitating easy insertion and removal of the cable.

The present invention further relates to a system for monitoring of parking spaces and for charging of electric vehicles, the system including a number of electric vehicle chargers as described above, wherein each electric vehicle charger is adapted to communicate with a cloud based server, wherein a number of mobile devices provided with a dedicated app may communicate with the cloud based server, wherein the system by means of the dedicated app may provide information to users about available free parking spaces, and wherein the system by means of the dedicated app may allow users to control charging of electric vehicles by means of the electric vehicle chargers. Thereby, available parking spaces may be monitored and drivers of electric vehicles may be directed to available parking spaces with an associated available charger. Furthermore, charging may easily be controlled. In this way, time and resources may be saved.

The present invention further relates to a method of charging an electric vehicle by providing electrical connection to the electric vehicle by means of an electric vehicle charger having a housing and being arranged at a roadside and/or at a parking space, the electric vehicle charger including a cable rail arranged in a groove of a pavement so that the cable rail is at least substantially flush with a surface of the pavement, wherein the cable rail forms an inner cable receiving channel being open in upward direction for insertion of an electric vehicle charging cable, wherein the inner cable receiving channel has a maximum width between inner walls of the inner cable receiving channel.

The method is characterised in that the inner walls are provided with respective restrictions at upper edges thereof, in that a restricted insertion space is formed between the restrictions and has a minimum width being smaller than the maximum width between the inner walls of the inner cable receiving channel, in that, before each charging session of an electric vehicle, an electric vehicle charging cable having a diameter being greater than the minimum width of the restricted insertion space formed between the restrictions is inserted into the inner cable receiving channel of the cable rail by flexing in downward direction the restrictions formed at the upper edges of the inner walls, and in that, after each charging session of an electric vehicle, the electric vehicle charging cable is removed from the inner cable receiving channel of the cable rail by flexing in upward direction the restrictions.

In an embodiment of the method of charging an electric vehicle, the electric vehicle charging cable is inserted into the inner cable receiving channel of the cable rail by firstly positioning at least a part of the electric vehicle charging cable above a part of the cable rail, and by subsequently pressing one part of the electric vehicle charging cable after the other into the inner cable receiving channel, thereby flexing in downward direction the restrictions formed at the upper edges of the inner walls of the inner cable receiving channel only at a part of the cable rail at a time, and the electric vehicle charging cable is removed from the inner cable receiving channel of the cable rail by firstly drawing in upward direction the electric vehicle charging cable at one end of the cable rail, thereby flexing in upward direction the restrictions formed at the upper edges of the inner walls of the inner cable receiving channel only at a part of the cable rail at a time, until the entire electric vehicle charging cable has been removed from the inner cable receiving channel. Thereby, insertion and removal of the electric vehicle charging cable into and from the cable rail may be facilitated. The force required by the user may be reduced due to the fact that only a part of the restrictions have to be bent flexibly at a time, as opposed to if the entire restrictions would have to be flexed in order to remove or insert the cable.

The present invention further relates to a method of installing an electric vehicle charger at a roadside and/or at a parking space in order to provide electrical connection to an electric vehicle for charging the vehicle, the electric vehicle charger having a housing, wherein the electric vehicle charger includes a cable rail, whereby the method includes the step of arranging the cable rail in a groove of a pavement so that the cable rail is at least substantially flush with a surface of the pavement, wherein the cable rail forms an inner cable receiving channel being open in upward direction for insertion of an electric vehicle charging cable.

The method of installing an electric vehicle charger is characterised by cutting the groove directly through only a top part of the existing pavement formed by different pavement materials, such as cobbles and concrete slabs, by using a cable rail formed from an at least slightly flexible material, such as rubber, and by fixing the cable rail in the groove of the pavement by means of glue. Thereby, the above-mentioned advantages may be achieved.

The invention will now be explained in more detail below by means of examples of embodiments with reference to the very schematic drawing, in which
Fig. 1 illustrates an electric vehicle parked at an available parking space at an electric vehicle charger according to the present invention, before initiating charging;
Fig. 2 illustrates the parked electric vehicle of Fig. 1, during charging;
Fig. 3 illustrates in a purely schematic way a cross-section through an outer wall of a building in which electric vehicle chargers according to the present invention have been mounted;
Fig. 4 is a perspective view of a cable rail according to an embodiment of the present invention, arranged in a groove of a pavement between an outer wall of a building and a street and/or parking space, wherein an electric vehicle charging cable has been inserted into the cable rail;
Fig. 5 illustrates in a purely schematic way, and for illustrational purposes only, a cross-section through a pavement into which different embodiments of cable rails have been arranged;
Fig. 6 is a perspective view of an embodiment of an electric vehicle charger according to the present invention, during insertion into an outer wall of a building;
Fig. 7 is a longitudinal cross-section through the electric vehicle charger of Fig. 6, during insertion into the outer wall of the building;
Fig. 8 is a longitudinal cross-section corresponding to that of Fig. 7, after insertion of the electric vehicle charger into the outer wall of the building, however shown without an internal electric cable;
Fig. 9 illustrates a road along which a car is parallel parked, seen from the perspective of an electric vehicle charger according to the present invention, mounted in an outer wall of a building;
Fig. 10 is an illustration corresponding to that of Fig. 9, wherein two cars are parallel parked with a distance there between;
Fig. 11 is a purely schematic illustration corresponding to that of Figs. 9 and 10, wherein four cars are parked in each their booth extending at right angles to the direction of the road;
Fig. 12 is a purely schematic illustration of a master/slave setup of three electric vehicle chargers according to the present invention;
Fig. 13 is a purely schematic illustration corresponding to that of Fig. 12 of a regular setup of three electric vehicle chargers according to the present invention;
Fig. 14 is a perspective view of an embodiment of an electric vehicle charger according to the present invention, during insertion into an outer wall of a building;
Fig. 15 is a longitudinal cross-section through the electric vehicle charger and wall of Fig. 14, during insertion of a housing of the charger into the outer wall of the building;
Fig. 16 is a longitudinal cross-section through the electric vehicle charger and wall of Fig. 14, after insertion of a housing of the charger into the outer wall of the building;
Fig. 17 is a longitudinal cross-section corresponding to that of Fig. 16, after insertion of the electric vehicle charger into the outer wall of the building;
Fig. 18 is a perspective view of the embodiment of an electric vehicle charger of Fig. 14, after insertion into an outer wall of a building;
Fig. 19 is a perspective view of a groove cut in a pavement between an outer wall of a building and a street and/or parking space for insertion of a cable rail according to an embodiment of the present invention;
Fig. 20 is a perspective view corresponding to that of Fig. 19, illustrating a cable rail before insertion into the groove cut in the pavement;
Fig. 21 is a perspective view corresponding to that of Fig. 20, illustrating the cable rail after insertion into the groove cut in the pavement;
Fig. 22 is a perspective view corresponding to that of Fig. 21, illustrating a cable before and during insertion into the cable rail mounted in the groove cut in the pavement;
Fig. 23 is a perspective view corresponding to that of Fig. 22, illustrating cables of different sizes after insertion into the cable rail mounted in the groove cut in the pavement; and
Fig. 24 is a perspective view corresponding to that of Fig. 23, illustrating a cable during removal from the cable rail mounted in the groove cut in the pavement.

In the following, generally, similar elements of different embodiments have been designated by the same reference numerals.

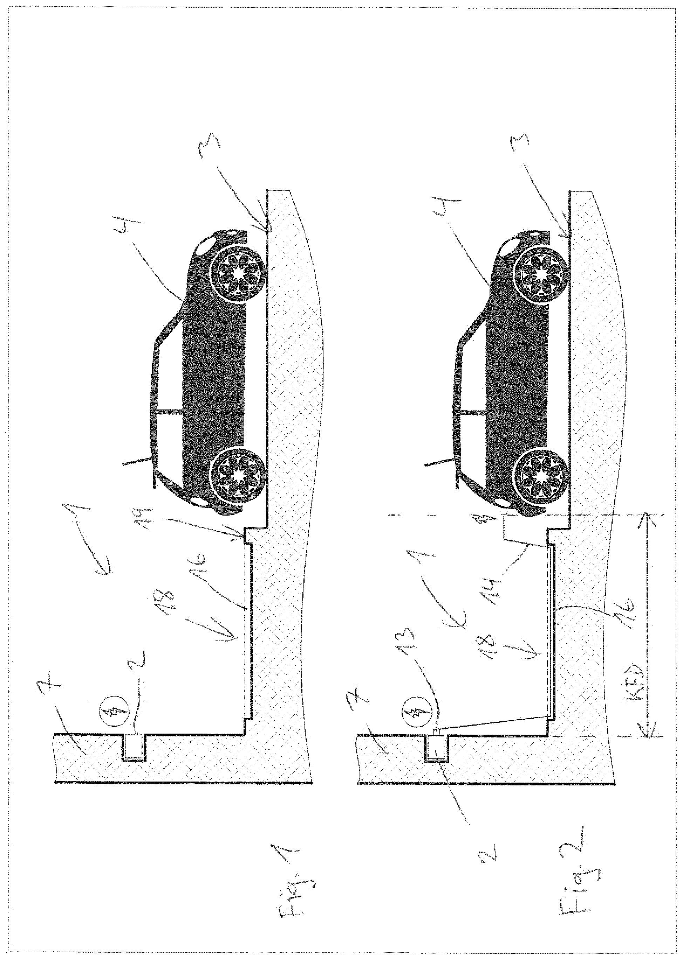

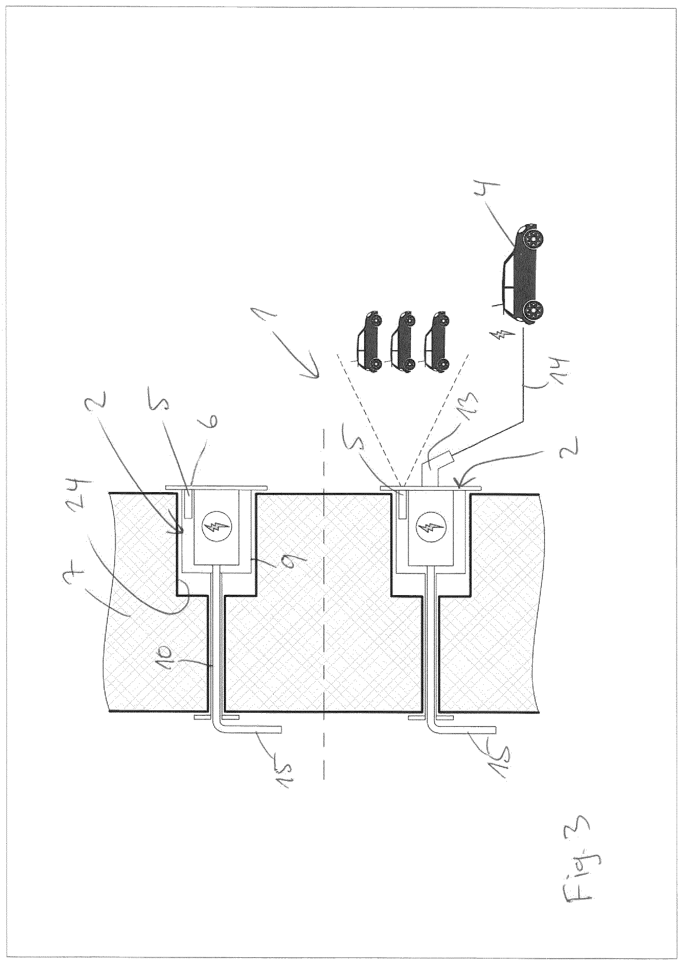

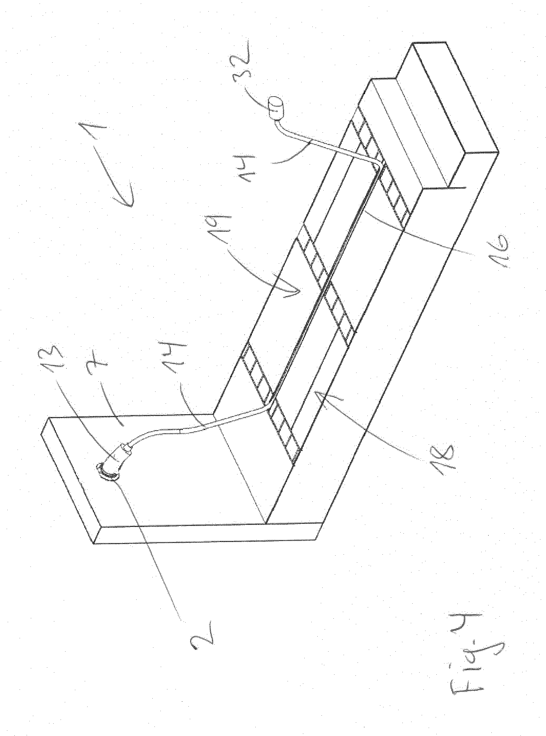

Figs. 1 to 4 illustrate an electric vehicle charger 1 according to the present invention. The electric vehicle charger 1 (EV charger) has a housing 2 and is adapted to be arranged at a roadside and/or at a parking space 3 for providing electrical connection to an electric vehicle 4 for charging the vehicle. The electric vehicle charger 1 may include one or more sensors 5 adapted to detect the presence or absence of a vehicle 4 or vehicles in the vicinity of the electric vehicle charger 1. The EV charger 1 may, for instance by means of a cloud-based mobile app, provide information to drivers of electric vehicles when the electric vehicle charger 1 is ready for use. The EV charger 1 may be ready for use if an available parking space 3 is detected in the vicinity of the EV charger and the charger is not already in use for charging.

In the illustrated embodiment, the sensor 5 is arranged in the housing 2 of the electric vehicle charger 1. Thereby, mounting may be greatly facilitated in that only the housing 2 of the electric vehicle charger 1 needs to be mounted suitably in order to arrange both the charger 1 and the sensor 5. The electric communication between the EV charger 1 and the sensor 5 may be arranged within the housing 2 and therefore, no extra cables may need to be arranged when mounting the EV charger 1.

However, in another embodiment, the sensor 5 could be arranged in a separate sensor housing which could be mounted at a distance from the housing 2 of the EV charger 1. The sensor 5 could communicate wirelessly with the charger control electronics 11 or could be wired thereto. More sensors housings with respective sensors 5 could be arranged at different positions in order to monitor a larger area of parking spaced in the vicinity of the EV charger 1.

Preferably, the sensor 5 includes a non-contact distance sensor and/or preferably has the form of a Light Detection and Ranging LIDAR device. Thereby, as an example, as indicated in Fig. 2, by means of the non-contact distance sensor or the LIDAR device, a free distance in front of the sensor 5 may be measured and compared to a known free distance KFD measured when a vehicle 4 is parked at an associated parking space 3. If the measured free distance in front of the sensor 5 is substantially larger than said known free distance KFD, the parking space 3 may be indicated as available. If a difference between the measured free distance in front of the sensor 5 and said known free distance KFD is within a certain interval, in etc. it is relatively small, the parking space 3 may be indicated as not available, i.e. occupied. If the measured free distance in front of the sensor is substantially smaller than said known free distance KFD, something may be placed in between the parking space 3 and the sensor 5. For example, a person or an object may be positioned on a pavement 18 between the parking space 3 and the sensor 5. In this case, the status of the parking space 3 may be indicated as unknown. As mentioned, this procedure is an example of how a non-contact distance sensor and/or a LIDAR device may be used for detection the status of a parking space 3. Different principles may be applied. For instance, the distance from the sensor 5 to a defined point of the parking space 3 furthest away from the sensor may be measured. If the measured distance is shorter than a known distance to this point, the status may be indicated as occupied, unless the distance is shorter than a known distance between the sensor 5 and a point of the parking space 3 nearest the sensor. In the latter case, the status of the parking space may be indicated as unknown due to the fact that something may be placed on the pavement 18, thereby obstructing the correct determination of the status.

According to the present invention, preferably the housing 2 of the electric vehicle charger 1 is adapted to be arranged on or in an outer wall 7 of a building. Thereby, the electric vehicle charger 1 may be easy to mount in that no digging may be required, especially if power is drawn from a power supply 8 inside the building. Furthermore, the electric vehicle charger 1 may not take up a lot of space on the pavement 18 or the street. Nevertheless, the electric vehicle charger 1 could be placed on a stand or the like.

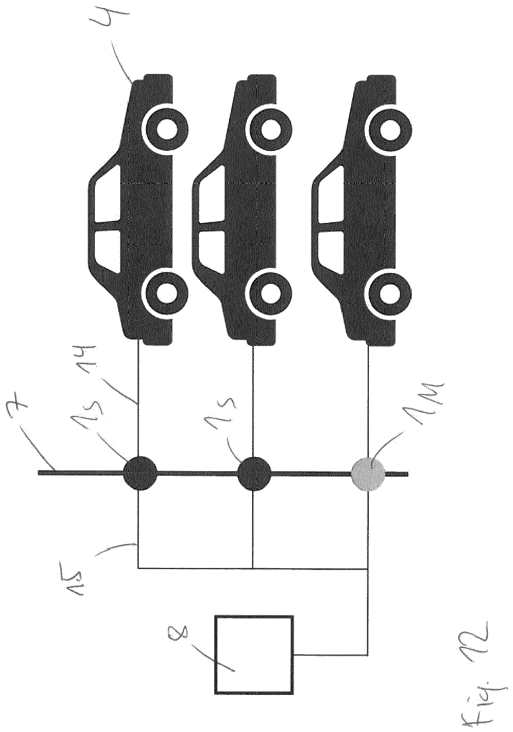

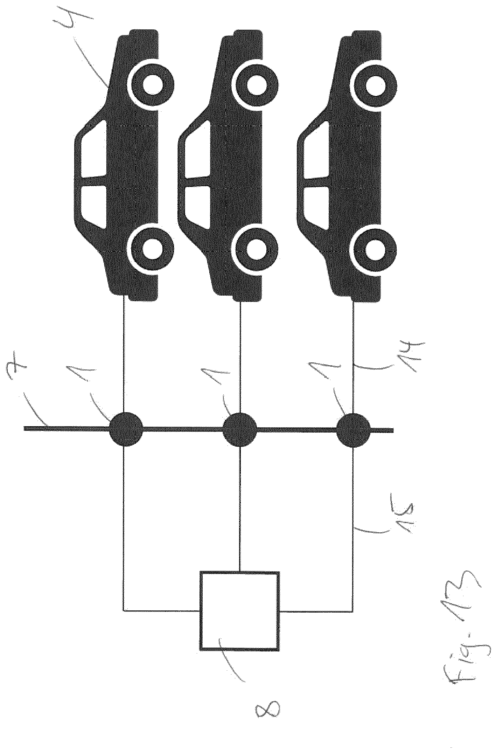

In the embodiments illustrated, the housing 2 is adapted to provide electrical connection through the outer wall 7 of the building from a power supply 8 inside the building to an electric vehicle 4 parked outside the building as seen for instance in Figs. 12 and 13. Thereby, cabling may be facilitated and no digging may be required. No separate power supply is needed in that an existing power supply 8 inside the building may be utilized.

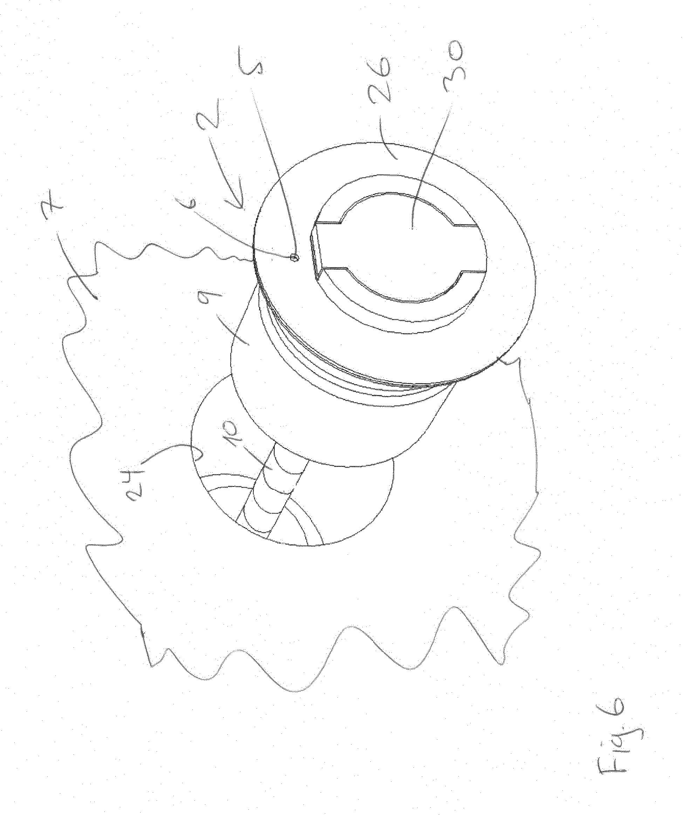

In the embodiment illustrated in Figs. 6 to 8, the housing 2 of the electric vehicle charger 1 includes a first tubular part 9 being generally cylindrical and having a first maximum cross-sectional dimension D and a second tubular part 10 being generally cylindrical and having a second maximum cross-sectional dimension d. The first maximum cross-sectional dimension D is substantially larger than the second maximum cross-sectional dimension d. The first tubular part 9 houses charger control electronics 11 and a standard socket 12, such as a Type 2 socket, for insertion of a plug 13 of an electric vehicle charging cable 14. It is however noted that in another embodiment, the standard socket 12 could be let out and an electric vehicle charging cable 14 could simply be directly and fixedly connected in the first tubular part 9. As seen, the standard socket 12 is protected by a hinged lid 30 being well-known in the art. Furthermore, the standard socket 12 may include an electromagnetically operated lock 31 adapted to lock the plug 13 in the standard socket 12 during charging which is also well-known in the art. The second tubular part 10 houses an electric cable 15 adapted to connect the power supply 8 inside the building to the electric vehicle charger 1.

Thereby, the mounting of the housing 2 of the EV charger 1 in the outer wall 7 of the building may be facilitated in that only two holes 24, 25 having different diameters have to be drilled in the outer wall in order to insert the housing 2 in the wall 7. For instance, a not shown cup drill may be used for drilling the relatively larger hole 24 in the outer part of the outer wall 7 in order to insert the first tubular part 9 and a normal drill may be used for drilling the relatively smaller hole 25 in the inner part of the outer wall 7 in order to insert the second tubular part 10.

Furthermore, in the illustrated embodiment, the housing 2 of the EV charger 1 is adapted to be retained in the outer wall 7 of the building by means of a cover plate 26 extending radially from an outer end of the first tubular part 9 and being adapted to abut an outer side of the outer wall 7 and by means of a washer 28 arranged about the second tubular part 10 and being adapted to abut an inner side of the outer wall 7. A nut 27 threaded on the second tubular part 10 is arranged to press the washer 28 against the inner side of the outer wall 7.

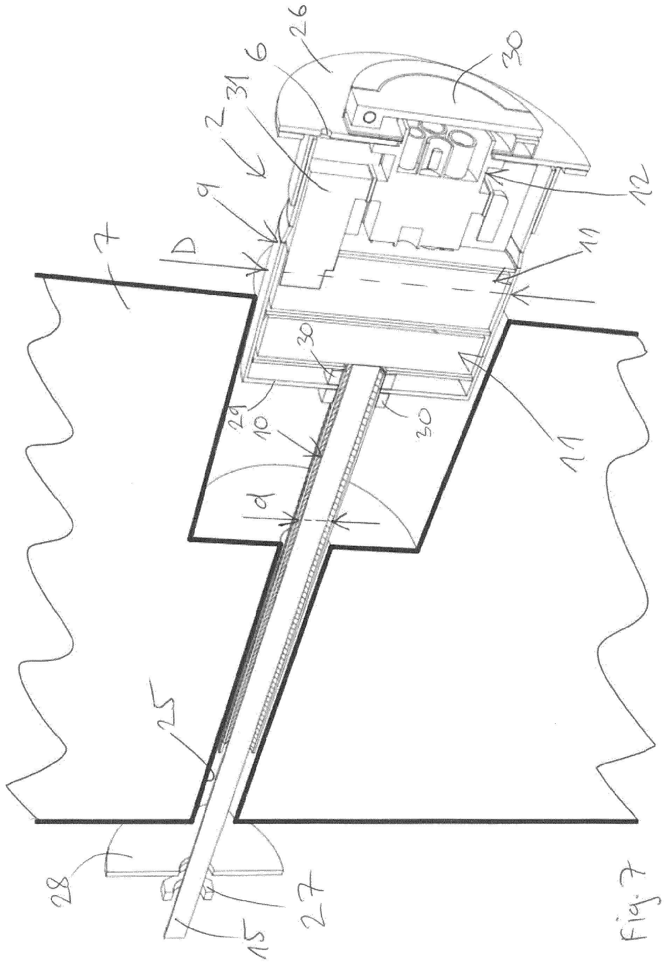

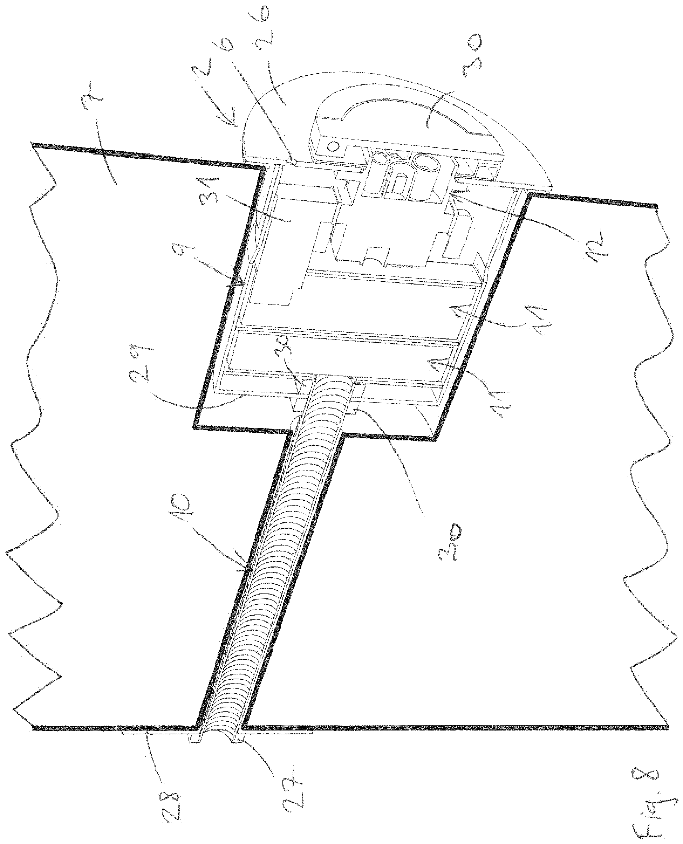

As seen in Figs. 7 and 8, the second tubular part 10 has the form of a tube provided with an outer thread. The first tubular part 9 has a bottom plate 29 having a central hole through which an end of the second tubular part 10 is inserted and fixed by means of nuts arranged on either side of the bottom plate 29. The electric cable 15 connecting the power supply 8 inside the building to the electric vehicle charger 1 extends through the second tubular part 10 as illustrated in Fig. 7. The housing 2 of the EV charger 1 is inserted into the wall 7 from the outside of the wall as seen in Fig. 7. When the housing 2 is fully inserted into the wall 7, as illustrated in Fig. 8, the nut 27 is threaded onto the second tubular part 10 and tightened in order to secure the housing 2 in the wall 7. As further seen, the cover plate 26 is provided with a hole 6 through which the sensor 5 may "look" or in which an outer part of the sensor 5, such as a lens system, may be arranged. It is noted that in Figs. 7 and 8, the sensor 5 is not illustrated. The parts of the housing 2 is suitably made of metal, such as steel, however, some of or all of these parts may also be made of other suitable materials, such as plastic.

It is noted, however, that the embodiment of the housing 2 of the EV charger 1 as described above is a separate invention that may be employed on its own and independently of whether the EV charger 1 is provided with a sensor 5 or not.

By means of the embodiment of the housing 2 of the EV charger 1 as described above, the footprint of an EV charger is drastically reduced as compared to known solutions.

Known EV chargers today are often an eyesore in cities because of their size. They take up much public space and are very expensive to install because their form factor does not allow them to be installed everywhere in a big city such as Copenhagen. This means that the business model that charging providers are using is a model that is based on the fact that cars need to be charged as fast as possible. Fast charging means thick and expensive power lines need to be dug out, special regulation to ensure cars are moved away when they're done charging and so on. That's why these chargers are so expensive, because they need a major infrastructural overhaul to even begin installing them. The expensiveness of these chargers slows down the uptake of EVs (which is exploding even despite of this) because people who live in apartment buildings doesn't know where they can charge their car.

In addition one of the key benefits of an EV is that you don't need to go somewhere to charge it. That is the truth for everybody who owns a house, but not true for anybody living in an apartment building. You may be lucky that you have a private parking space with charger(s), but those cases are rare. Most urban use-cases to charge an EV means going somewhere to charge it. This also slows down the uptake of EVs.

However, the EV charger according to the present invention brings the joys of owning an EV in a house to apartment-dwellers by enabling them to charge anywhere they park with a sleek and practically invisible EV charger that won't disturb the streets and won't require digging.

The EV charger 1 may implement the standard IEC 62196 Type 2 EV charging which makes it useable for the large majority of electric vehicles on the road today. It may support up to 3-phase and 32A charging meaning that it can go from 1KW to 22KW but this can easily be upgraded to handle more if needed. The charger may also implement the standard solenoid based locking mechanisms which locks the connector of the EV charging cable 14 in place once the charger is connected to the vehicle. It may also be self-contained in that it does not necessarily need a LAN or Wifi connection to function because it may contain a GSM module which allows it to communicate with cloud based servers. The EV charger 1 may support dynamic load balancing which means that it can adapt the output of the charger to the amount of power available in the building. This may be highly useful during peak hours of electricity use in a building typically early morning and late afternoon/early evening. This effectively means that we can go from charging with 22KW at mid day when electricity use in the building is low to maybe 3KW in the late afternoon when electricity use in the building increases again.

Finally, the charger may be intelligent in such a way that users or an operator can program the EV charger such that it will only charge the connected car at the optimum time based on charging speed, electricity cost or carbon footprint of electricity or a mix of these. This supports a wide variety of use cases such as people needing to charge their car fast or people who only needs the car the next day and thus wants to optimize for cost of carbon footprint.

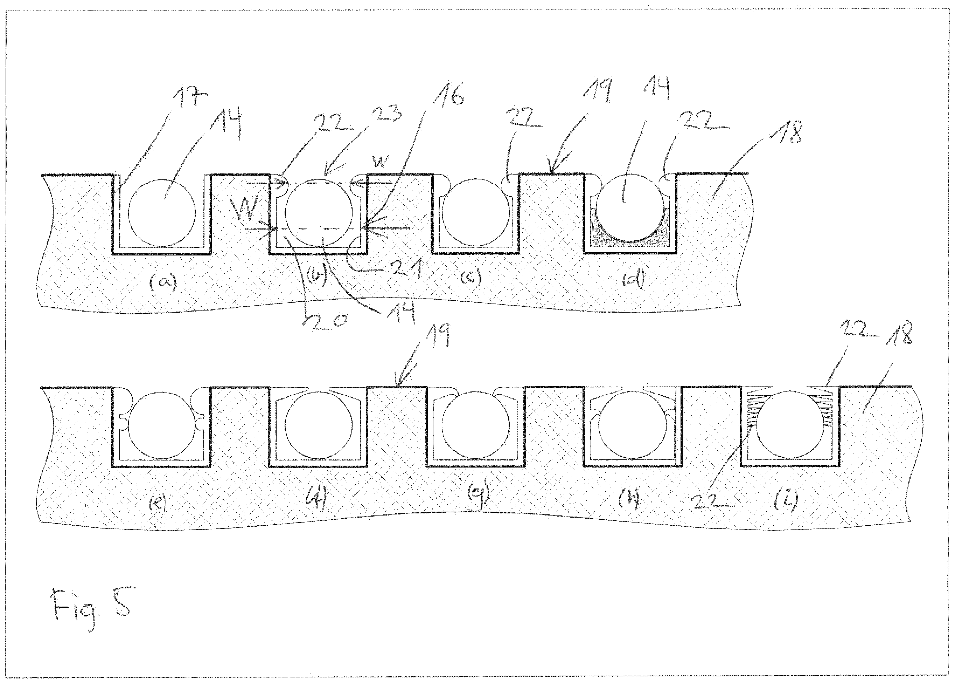

In the illustrated embodiment, the electric vehicle charger 1 includes a cable rail 16 adapted to be arranged in a groove 17 of a pavement 18 so that the cable rail 16 is flush with a surface 19 of the pavement 18, as illustrated in Figs. 1, 2, 4 and 5. The cable rail 16 forms an inner cable receiving channel 20 being open in upward direction for insertion of an electric vehicle charging cable 14. As illustrated in Fig. 5 (b), the inner cable receiving channel 20 has a maximum width W between inner walls 21 of the inner cable receiving channel 20. The inner walls 21 are provided with respective restrictions 22 at upper edges thereof, and a restricted insertion space 23 is formed between the restrictions 22 and has a minimum width w being smaller than the maximum width W between the inner walls 21 of the inner cable receiving channel 20.

Thereby, in order to charge an electric vehicle 4, a standard connector 32 at a first end of an electric vehicle charging cable 14 may be connected to the electric vehicle charger 1 and a plug 13 at a second end of the electric vehicle charging cable 14 may be connected to the electric vehicle 4, and the main part of the cable itself may easily be inserted into and thereby stowed away in the inner cable receiving channel 20 of the cable rail 16. As a result, the electric vehicle charging cable 14 may not obstruct the free passage of pedestrians on the pavement 18 between the housing 2 of EV charger 1 and the electric vehicle 4.

Due to the restricted insertion space 23 formed between the restrictions 22 at the upper edges of the inner walls 21 of the cable rail 16, an electric vehicle charging cable 14 having a suitable thickness and/or diameter being at least slightly larger than the minimum width w of the restricted insertion space 23, such as illustrated in Fig. 5 (b), may be inserted into the inner cable receiving channel 20 by deformation of the cable 14 and/or the restrictions 22. During charging of the electric vehicle 4, the cable 14 may be retained inside the inner channel 20 of the cable rail 16 by the restrictions 22, and the cable 14 may easily be removed from the cable rail when charging is finished. In this way, drivers of electric vehicles may use their own charging cables 14 for connection between the housing 2 of the EV charger 1 and their vehicle 4.

Fig. 5 illustrates different embodiments (a) to (i) of the cable rail 16. In particular, as seen, the form and number of restrictions 22 may vary. Embodiment (a) does not have any restrictions, and consequently additional means may be necessary to keep the cable 14 inside the cable rail 16 during charging. Such additional means could for instance be tiltable brackets or the like arranged at either end of the cable rail and possibly also at certain positions between the ends thereof. Such tiltable bracket may be adapted to tilt between a position allowing a cable to be inserted into the cable rail 16 and a position in which the cable is prevented from exiting the cable rail through its upper opening. Furthermore it is noted that according to embodiment (b) to (i), the illustrated restrictions 22 are not necessarily arranged at either side of the cable receiving channel 20 and are not necessarily arranged in the full length of the cable receiving channel 20. For instance, restrictions as illustrated may be arranged at certain intervals along the cable rail 16 and the restrictions may have any suitable length in the longitudinal direction of the cable rail 16. Embodiment (d) is provided with an additional retaining element 33, such as elastic foam or similar support which may be provided in the entire length of the cable rail 16 or only at some longitudinal positions thereof.

The restrictions 22 formed at the upper edges of the inner walls 21 may be flexible. Thereby, easy insertion of an EV charging cable 14 into the cable rail 16 and subsequent removal of the cable from the rail may be facilitated.

In some embodiments, as illustrated in Fig. (e), (h) and (i), each upper edge of the inner walls 21 of the inner cable receiving channel 20 are provided with a number of possibly flexible, layered restrictions 22 arranged above each other. Thereby, retention of an EV charging cable 14 inside the cable rail 16 during charging may be even better ensured while still facilitating easy insertion and removal of the cable 14.

The different retention mechanisms illustrated have the benefit of supporting multiple types of cable thicknesses depending on what is most prevalent in the relevant area.

The cable rail 16 may be produced from any suitable material, such as plastic or metal. Some parts of the cable rail 16 may be produced from one material, and another part of the cable rail may be produced from another material. For instance, the inner cable receiving channel 20 itself may be produced from metal, but the restriction or restrictions 22 may be produced from plastic, rubber or any other suitable and possibly flexible material.

The cable rail 16 enables the connection of the housing 2 of an EV charger 1 mounted in the wall 7 of an apartment building to a car 4 parked next to the building, but beyond a pavement 18. Thus the cable rail 16 makes it possible to unobtrusively draw the EV charging cable 14 across the pavement 18 without putting the public using the pavement to walk, bike, roll etc. on in danger while at the same time eliminating the need for costly (in terms of time and money) digging and construction.

A key feature of the cable rail 16 is that it enables a so-called "loose installation" to connect to the cars. The term loose installation refers to the fact that it is users themselves who use their own charging cable 14 which they connect to the car for a fixed period of time, i.e. they remove it again at some point. This eliminates any requirement of digging and the EV charging cables 14 are built to handle things like people stepping on them. The cable rail 16 may be milled into the pavement 18 using a standard milling machine which for instance cuts a roughly 3 cm by 3 cm cut in the pavement. The cable rail 16 can then be mounted inside this in a variety of ways (e.g. glue, screws, and similar) such that it is at least substantially flush with the pavement 18.

It is noted, however, that the provision of a cable rail 16 as described above is a separate invention that may be employed on its own and independently of the embodiment of the remaining parts of the EV charger 1, such as the housing 2 thereof or the sensor 5. In particular, it is evident that the cable rail 16 as described above may also be employed together with an EV charger 1 without a sensor 5 as described above.

Furthermore, the provision of a cable rail 16 as described above is a separate invention that may be employed on its own and independently of the embodiment of the housing 2 of the EV charger 1 as described above.

According to the present invention, a system for monitoring of parking spaces and for charging of electric vehicles 4 may include a number of electric vehicle chargers 1 according to any one of the embodiments as described above. Each electric vehicle charger 1 may be adapted to communicate with a cloud based server, for instance via wireless connection, such as GSM. A number of mobile devices, such as smartphones, provided with a dedicated app may communicate with the cloud based server. The system may by means of the dedicated app provide information to users about available free parking spaces 3, and the system may by means of the dedicated app allow users to control charging of electric vehicles 4 by means of the electric vehicle chargers 1. Thereby, available parking spaces 3 may be monitored and drivers of electric vehicles 4 may be directed to available parking spaces with an associated available charger 1. Furthermore, charging may easily be controlled. In this way, time and resources may be saved.

The EV chargers 1 may communicate various data about the state of the charger such as which IEC 62196 Type 2 Charging State it's currently in, whether the charger is online and functioning, how much power the charger is currently outputting and so on. However, the EV charger 1 may first and foremost be programmed to act as an IEC 62196 Type 2 Charger, this means that the charger itself doesn't know which user is connected to it. It only knows that a car is connected and whether or not it should begin charging it. This may also be a security feature since in the case of somebody stealing a charger any user data will not be lost. All authentification of users with a specific EV charger may happen via the app and the EV charger may simply be told whether or not to charge the car that is connected to it. This may also a safety feature, because this means that the charger at all times works as a regular IEC 62196 Type 2 charger, hence it may be independent on any user interaction and simply does what the cars tells it to. Although it might reject charging a car if a user hasn't authenticated fully yet or delay charging if it's more optimal to charge later. But if the car for whatever reason wants to stop charging (overheating, charging completed etc.) the charger may always respond instantly and not await any user or server input on what to do. All communication between the charger and cloud servers may be handled using state-of-the-art SSL encryption and using a GSM connection.

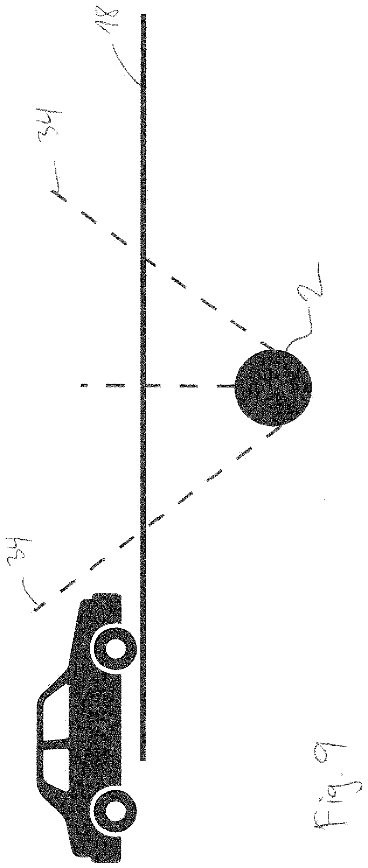

Referring now to Figs. 9 to 11, examples will be given explaining the use of LIDAR or similar ranging sensor technology for the sensor 5 that enables us to calculate the distances to objects in front of the housing 2 of the EV charger 1. The general operation works like illustrated in Fig. 9 in which we see the road or parking space 3 from the perspective of the housing 2 of the EV charger 1, i.e., as if we were looking out of the hole 6 in Figs. 6 to 8. The figure shows the housing 2 mounted in a wall 7, the pavement 18 and it shows the LIDAR or similar sensor based technology field of view delimited by broken lines 34.

Depending on the mode of parking on the street the sensor 5 may be configured in one or two ways: Sweep mode or sampling mode.

### Parallel parking (sweep mode)

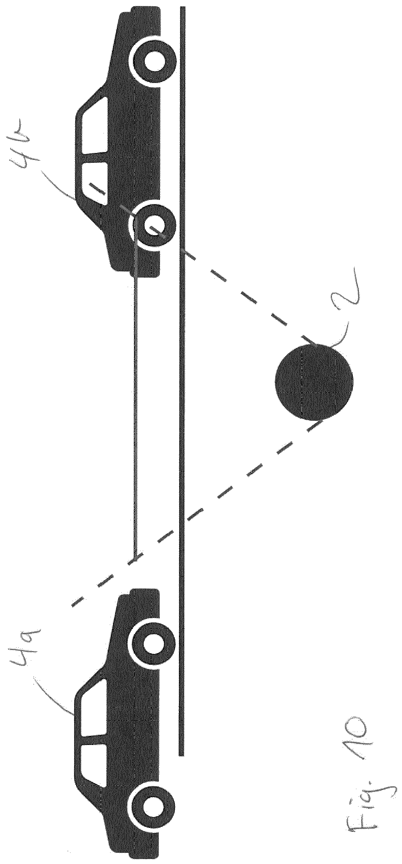

In the case of the street employing parallel parking the sensor 5 may be configured to sweep the entire field of view in a linear pattern such as to cover the middle of the area where cars would parallel park next to the sensor 5. In Fig. 10, this situation is demonstrated: Here we see two cars parked, a left one 4a outside the field of view of the sensor 5 and another right one 4b parked about 1/3 in the sensors field of view. The sensor 5 measures the distance from the sensor 5 and to the ground with small steps in between each measurement. At one point when the sensor 5 gets all the way to the right it will detect that the distance between the sensor 5 and the road or parking space 3 is smaller than the other points. This indicates an object is in the way. The sensor 5 can then also calculate the distance between the left side (where there's no object) and where the object to the right begins. Hence it can further help users by letting them know the amount of space available.

### Booth parking (sampling mode)

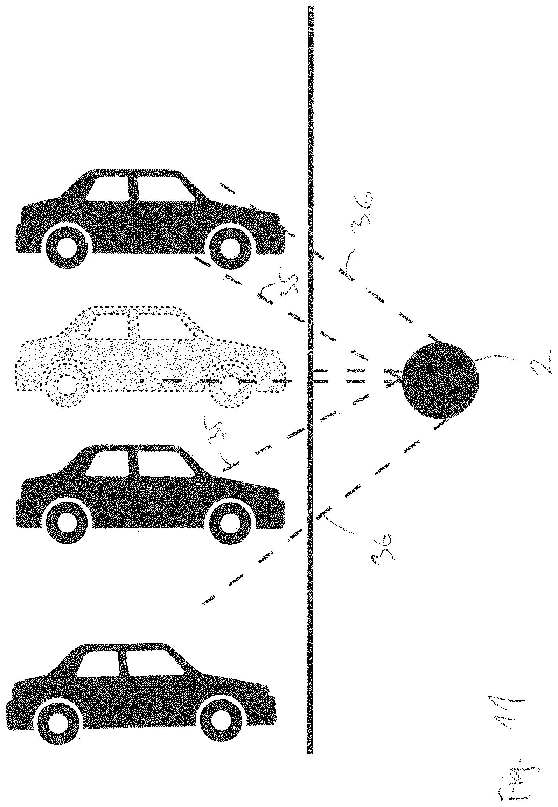

For booth parking as illustrated in Fig. 11, the EV charger 1 may be configured in such a way that it will continuously monitor the distance to one or more coordinates in physical space illustrated by broken lines 35. When there are no cars present in the sensors field of view that distance should be constant and calibrated to be further away than the pavement, as seen in Fig. 11. The points which will be sampled may be configured manually such as to be in the center of the booth parking spaces that the sensor 5 can see in it's field of view illustrated by broken lines 36. In the case illustrated, the sensor 5 can see three parking spaces 3 in which two are occupied, the two black cars to the right, and the one (the gray car) between those is unoccupied.

For both booth and parallel parking we of course have to cover the case in which something passes in between the sensor 5 and the road or parking space 3. This may simply be handled by programming the control electronics of the sensor 5 to know the distance to the edge of the pavement 18. If the distance returned is shorter than the distance to the edge of the pavement 18 it is known that something has passed between the sensor 5 and the edge of the pavement, hence the control electronics of the sensor can just ignore that measurement. If something is permanently blocking the sensor 5 we will also be able to know this and can notify users that we can't see the parking space 3 so we don't know the state of this particular parking space.

As an example, in the booth parking scenario illustrated in Fig. 11, perhaps the measurement along broken lines 35 to left and right car measures 3.5 m, but because there's no car in middle space (illustrated by a gray car) that distance might be 4.5 m.

Referring now to Figs. 12 and 13, examples will be given explaining a master/slave type setup in which multiple EV chargers 1 can be controlled by one master charger. The master and slaves are in this way attached to the same point in the buildings main relay (power supply 8) hence they can share the power between them with the master controlling the power flow. This may be very useful when a building might not have the full electric capacity to power many EV chargers 1. Then we can still serve multiple cars by scaling down the amount of power that flows based on how many cars are connected. A further benefit of employing many EV chargers despite only having the power capacity to drive a smaller number is that the there may be more parking sensors 5 arranged at a parking area in this way. Fig. 12 shows the setup. The grey EV charger 1_{M} in the bottom is the master charger which controls the power flow to the slave chargers 1_{S}. The white box to the left is the main relay. In order to illustrate the difference, Fig. 13 shows the regular setup where each EV charger 1 controls it's own flow of power.

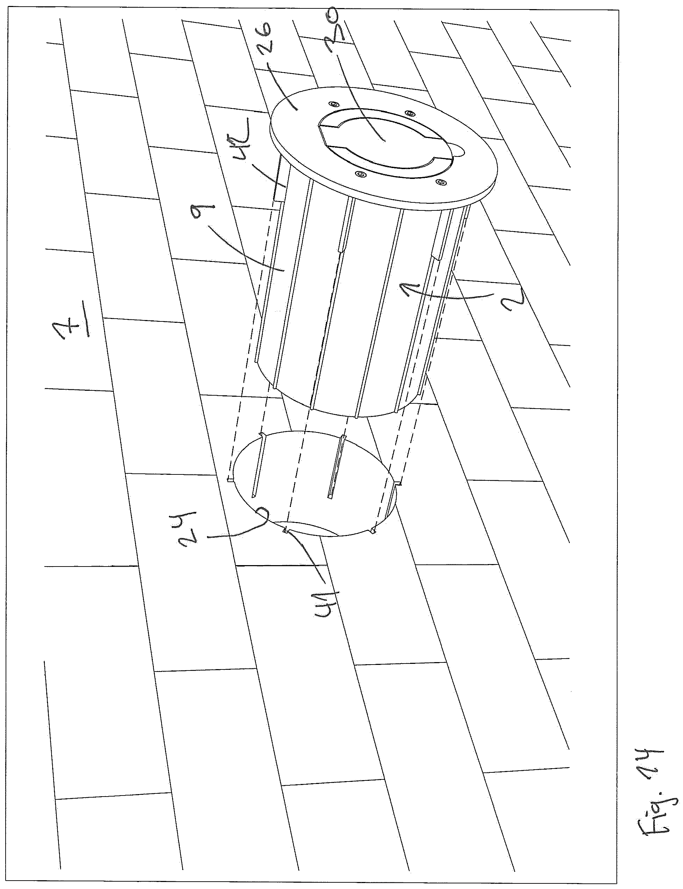

Figs. 14 to 18 illustrate an alternative embodiment of an electric vehicle charger 1 having a housing 2 and being arranged at a roadside and/or at a parking space 3. The electric vehicle charger 1 is adapted to provide electrical connection to an electric vehicle 4 for charging the vehicle. The housing 2 of the electric vehicle charger 1 is arranged in an outer wall 7 of a building, and the housing 2 is adapted to provide electrical connection through the outer wall 7 of the building from a power supply 8 inside the building to an electric vehicle 4 parked outside the building.

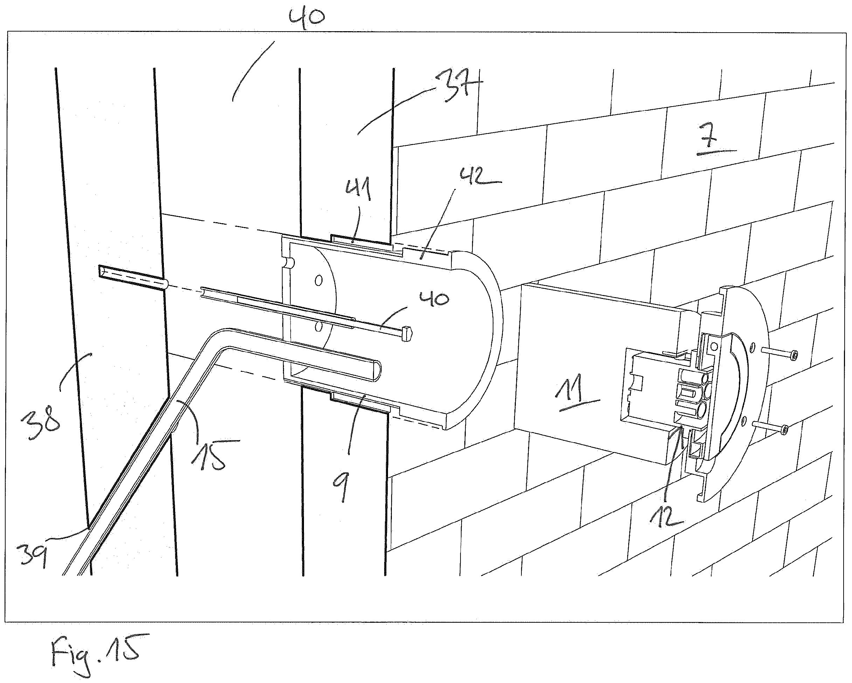

The housing 2 of the electric vehicle charger 1 includes a tubular part 9 being generally cylindrical, and the tubular part 9 houses charger control electronics 11 and a socket 12 for insertion of a plug 13 of an electric vehicle charging cable 14. As seen in Figs. 15 to 17, an electric cable 15 is arranged to connect the power supply 8 inside the building to the electric vehicle charger 1.

The generally cylindrical tubular part 9 is fixed in a generally cylindrical hole 24 in an outer part 37 of the outer wall 7. The electric cable 15 extends through an inner part 38 of the outer wall 7 at a lower level than a level of the generally cylindrical tubular part 9.

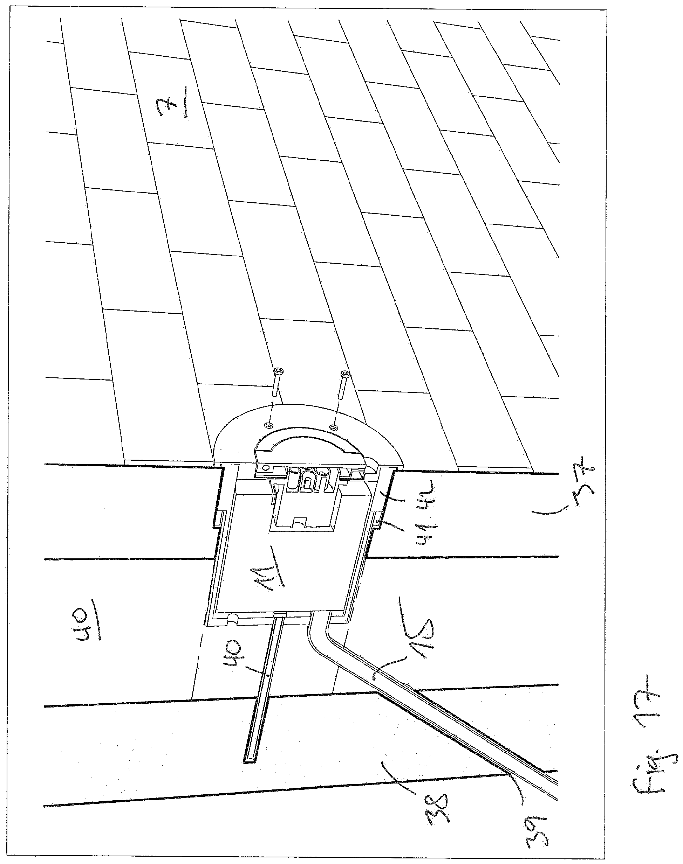

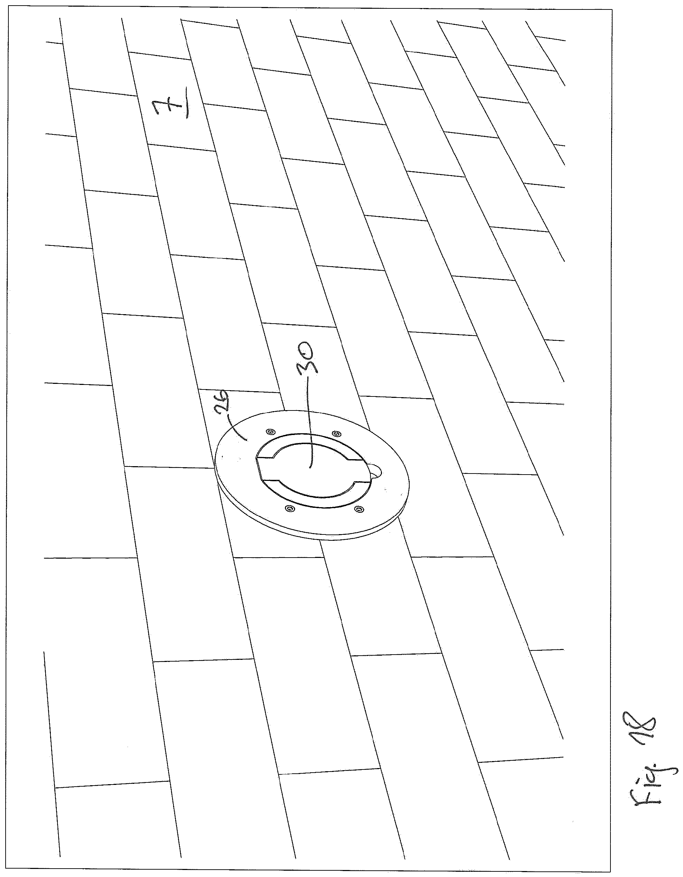

As seen in Figs. 17 and 18, the housing 2 and the socket 12 are arranged at least substantially flush with an outer surface of the outer wall 7 of the building.

As illustrated in Figs. 14 to 18, according to a method of installing the electric vehicle charger 1 at a roadside and/or at a parking space 3 in order to provide electrical connection to an electric vehicle 4 for charging the vehicle, a first hole 24 is provided in the outer part 37 of the outer wall 7 of the building. The housing 2 of the electric vehicle charger 1 is arranged in the first hole 24 in the outer wall 7 of the building, and the housing 2 is arranged to provide electrical connection through the outer wall 7 of the building from a power supply 8 inside the building to an electric vehicle 4 parked outside the building.

The housing 2 may for example be fixed in the first hole 24 by glue or by means of a screw 40. The screw 40 may be inserted into the inner part 38 of the outer wall 7. Typically, isolation may be arranged between the inner part 38 and the outer part 37 of the outer wall 7. Small grooves 41 may be cut in the inner wall of the first hole 24, matching small flaps 42 on the tubular part 9 of the housing 2 of the electric vehicle charger 1, thereby preventing rotation of the housing in the hole.

The method may include providing the first hole 24 in the outer part 37 of the outer wall 7 by employing a hole saw from an outside of the outer wall 7.

The method may include drilling a second hole 39 from an inside of the inner part 38 of the outer wall 7, by starting drilling the second hole 39 from a lower level than a level of the first hole 24, and the method may include inserting an electric cable 15 through the second hole 39 and thereby connecting the power supply 8 inside the building to the electric vehicle charger 1.

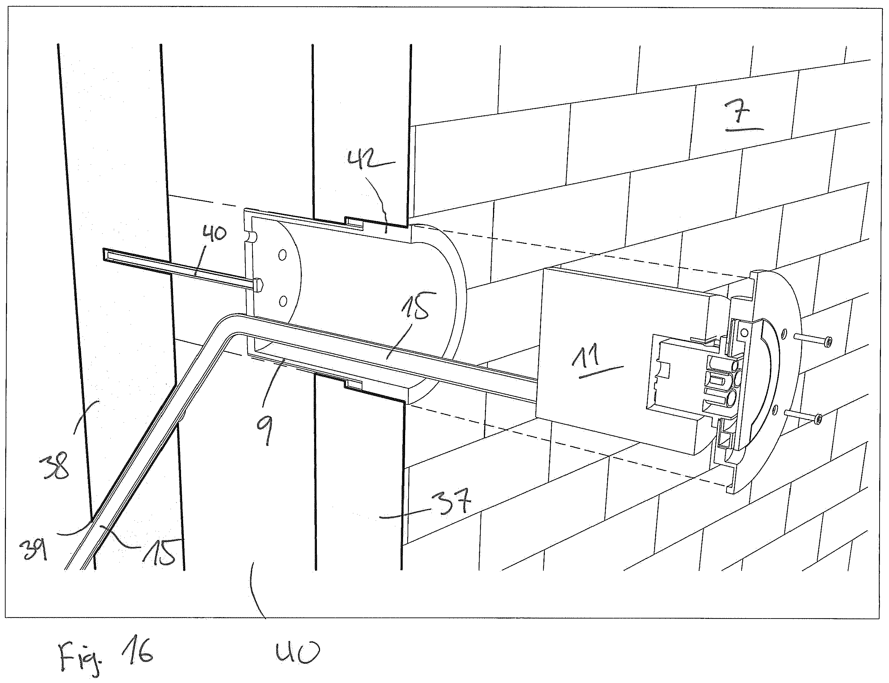

As illustrated in Figs. 15 and 16, preferably, the housing 9 of the charger is mounted in the outer wall 7, and the electric cable 15 is arranged through the hole 39 in the inner part 38 of the outer wall 7, before the charger control electronics 11 is mounted inside the housing 9. Therefore, at a later stage, it is also possible to perform service to the charger without entering the building, because the charger control electronics 11 is accessible from outside the building.

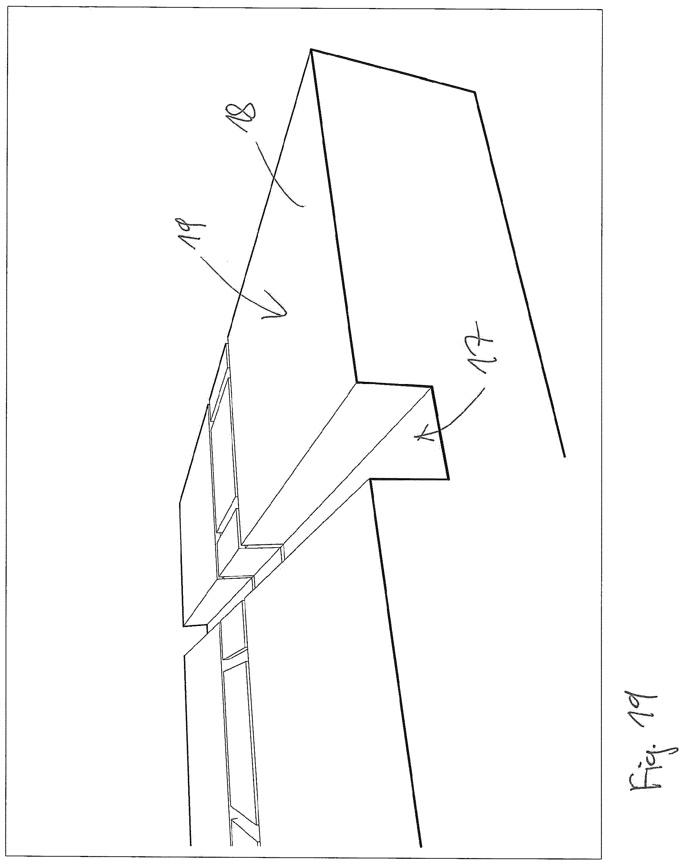

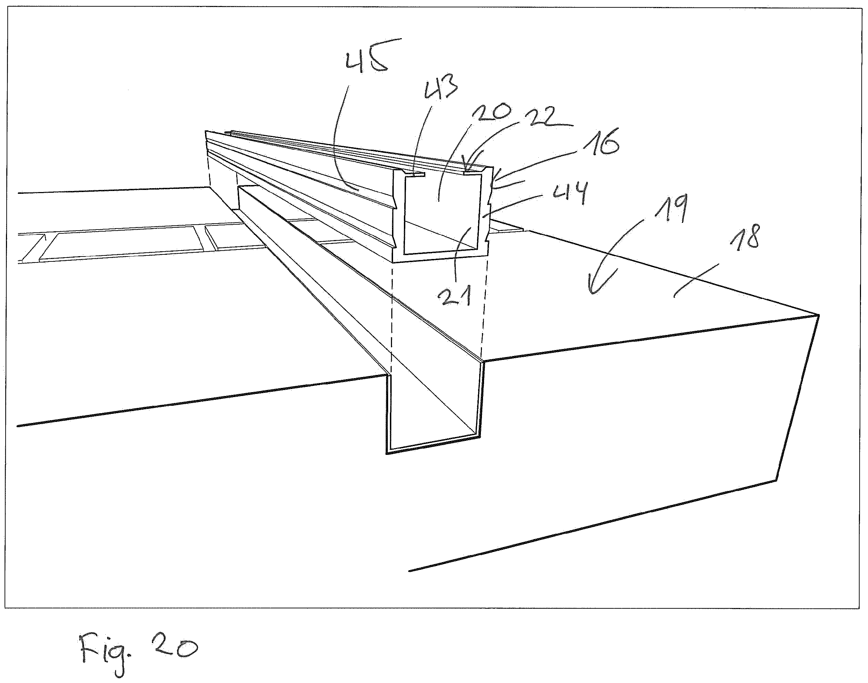

Figs. 19 to 24 illustrate an embodiment of the electric vehicle charger 1 having a housing 2 and being arranged at a roadside and/or at a parking space 3. The electric vehicle charger 1 includes a cable rail 16 arranged in a groove 17 of a pavement 18 so that the cable rail 16 is at least substantially flush with a surface 19 of the pavement 18. The cable rail 16 forms an inner cable receiving channel 20 being open in upward direction for insertion of an electric vehicle charging cable 14, and the inner cable receiving channel 20 has a maximum width W between inner walls 21 of the inner cable receiving channel 20. The inner walls 21 are provided with respective restrictions 22 at upper edges thereof. A restricted insertion space 23 is formed between the restrictions 22 and has a minimum width w being smaller than the maximum width W between the inner walls 21 of the inner cable receiving channel 20. The restrictions 22 formed at the upper edges of the inner walls 21 are flexible.

Preferably, the minimum width w of the restricted insertion space 23 formed between the restrictions 22 is less than 0.8 times, preferably less than 0.7 times and most preferred less than 0.6 times the maximum width W between the inner walls 21 of the inner cable receiving channel 20.

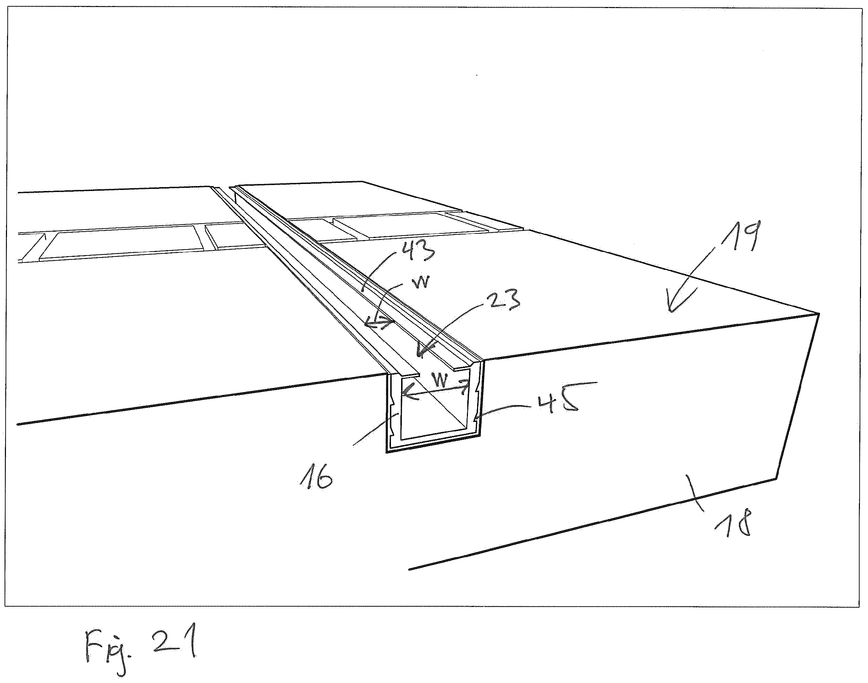

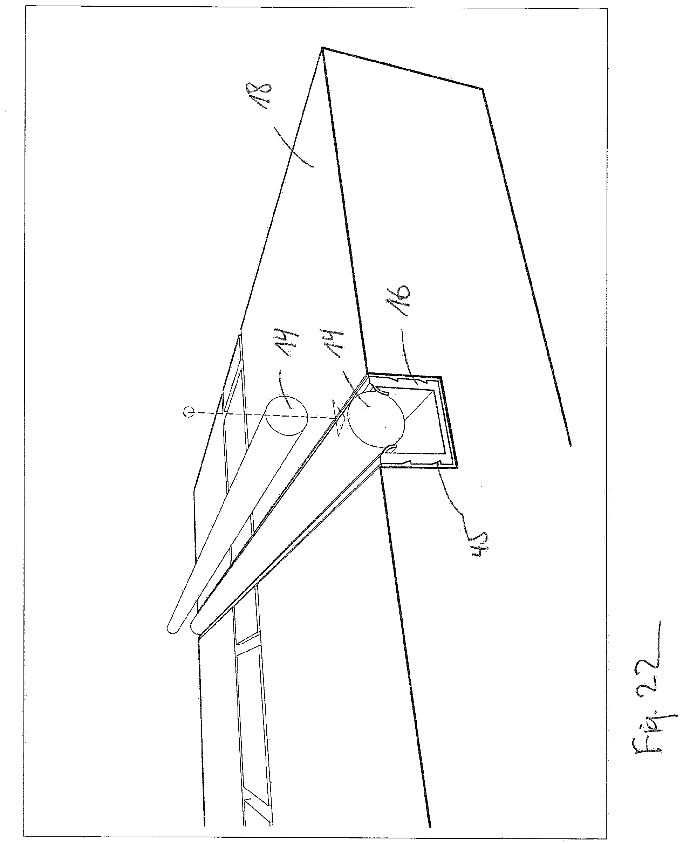

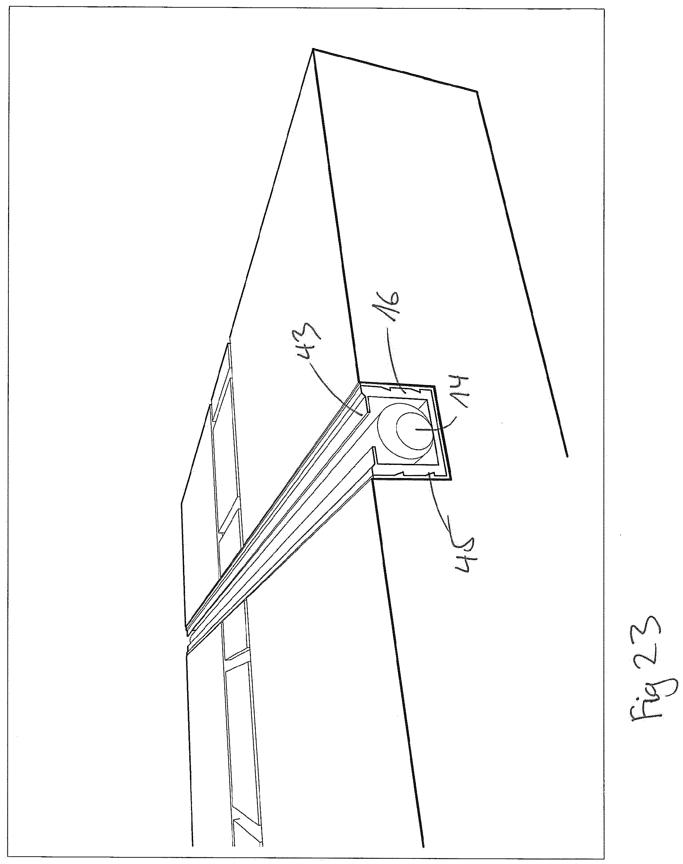

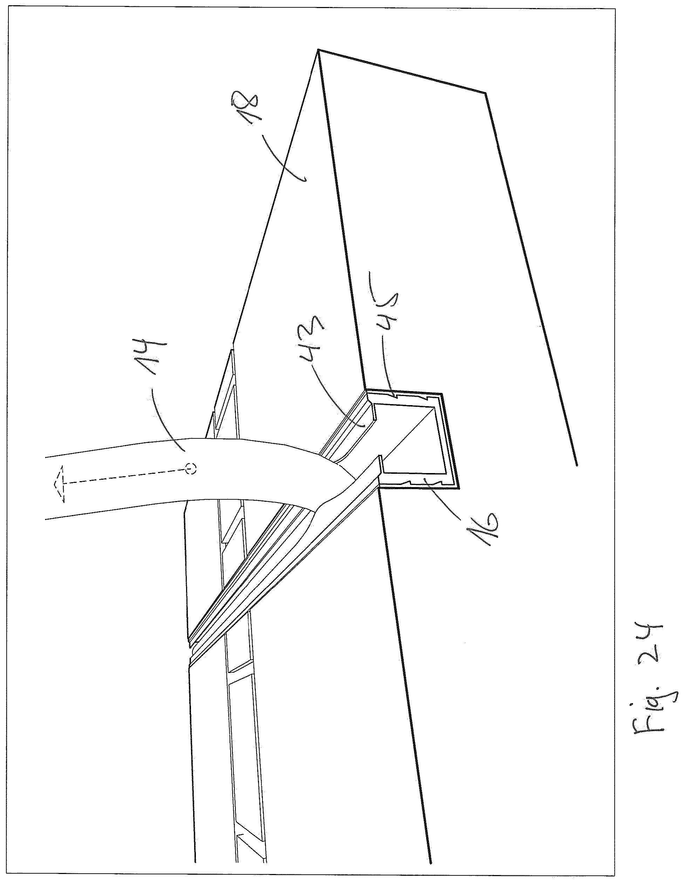

In the embodiment illustrated in Figs. 19 to 24, the restrictions 22 formed at the upper edges of the inner walls 21 have the form of flexible flaps 43 adapted to bend flexibly between a straight position in which the flaps extend at least substantially in the direction of each other, as seen in Figs. 21 and 23, and a bent position in which at least a part of the flaps 43 are bent at least partly up or down in relation to the upward open inner cable receiving channel 20, as seen in Figs. 22 and 24.

The cable rail 16 includes a bottom wall and two opposed side walls 44, each side wall generally having a minimum wall thickness. Each flexible flap 43 has a maximum wall thickness being smaller than, preferably less than 0.6 times, preferably less than 0.5 times and most preferred less than 0.4 times the minimum wall thickness of each side wall 44.

The cable rail 16 may be provided with preferably longitudinally extending grooves 45 on the outside of its opposed side walls 44. The grooves 45 may facilitate attachment of the cable rail in the groove 17 of the pavement 18. For instance, if the cable rail 16 is fixed in the groove 17 by means of glue, an additional amount of glue may be retained in the grooves 45 during insertion and may ensure better fixation of the cable rail.

The entire cable rail 16 may preferably be formed from an at least slightly flexible material, such as rubber. Thereby, the entire cable rail may be produced as one piece, for instance by extrusion, from the same material, and the restrictions may be flexible. Furthermore, the walls of the cable rail itself may also be flexible, whereby the cable rail may better adapt to imperfections of the groove formed in the pavement. During use, the components of the pavement, such as curb stones and concrete slabs, may move slightly in relation to each other, and it may be advantageous that the cable rail is able to adapt to such variations of the pavement.

According to a method of charging an electric vehicle, electrical connection is provided to the electric vehicle 4 by means of an electric vehicle charger 1 having a housing 2 and being arranged at a roadside and/or at a parking space 3. The electric vehicle charger 1 includes a cable rail 16 arranged in a groove 17 of a pavement 18 so that the cable rail 16 is at least substantially flush with a surface 19 of the pavement 18. The cable rail 16 forms an inner cable receiving channel 20 being open in upward direction for insertion of an electric vehicle charging cable 14. The inner cable receiving channel 20 has a maximum width W between inner walls 21 of the inner cable receiving channel 20. The inner walls 21 are provided with respective restrictions 22 at upper edges thereof, a restricted insertion space 23 is formed between the restrictions 22 and has a minimum width w being smaller than the maximum width W between the inner walls 21 of the inner cable receiving channel 20. Before each charging session of an electric vehicle, an electric vehicle charging cable 14 having a diameter D being greater than the minimum width w of the restricted insertion space 23 formed between the restrictions 22 is inserted into the inner cable receiving channel 20 of the cable rail 16 by flexing in downward direction the restrictions 22 formed at the upper edges of the inner walls 21. After each charging session of an electric vehicle, the electric vehicle charging cable 14 is removed from the inner cable receiving channel 20 of the cable rail 16 by flexing in upward direction the restrictions 22.

According to an embodiment of the method of charging an electric vehicle, the electric vehicle charging cable 14 is inserted into the inner cable receiving channel 20 of the cable rail 16 by firstly positioning at least a part of the electric vehicle charging cable 14 above a part of the cable rail 16, and by subsequently pressing one part of the electric vehicle charging cable 14 after the other into the inner cable receiving channel 20, thereby flexing in downward direction the restrictions 22 formed at the upper edges of the inner walls 21 of the inner cable receiving channel 20 only at a part of the cable rail 16 at a time. The electric vehicle charging cable 14 is removed from the inner cable receiving channel 20 of the cable rail 16 by firstly drawing in upward direction the electric vehicle charging cable 14 at one end of the cable rail 16, thereby flexing in upward direction the restrictions 22 formed at the upper edges of the inner walls 21 of the inner cable receiving channel 20 only at a part of the cable rail 16 at a time, until the entire electric vehicle charging cable 14 has been removed from the inner cable receiving channel 20.

According to a method of installing an electric vehicle charger 1 at a roadside and/or at a parking space 3 in order to provide electrical connection to an electric vehicle 4 for charging the vehicle, the method includes the step of arranging the cable rail 16 in a groove 17 of a pavement 18 so that the cable rail 16 is at least substantially flush with a surface 19 of the pavement 18. The cable rail 16 forms an inner cable receiving channel 20 being open in upward direction for insertion of an electric vehicle charging cable 14. The groove 17 is cut directly through only a top part of the existing pavement 18 formed by different pavement materials, such as cobbles and concrete slabs. A cable rail 16 formed from an at least slightly flexible material, such as rubber, is used, and the cable rail 16 is fixed in the groove 17 of the pavement 18 by means of glue.

### Embodiments

Embodiment 1. An electric vehicle charger (1) having a housing (2) and being adapted to be arranged at a roadside and/or at a parking space (3), the electric vehicle charger (1) being adapted to provide electrical connection to an electric vehicle (4) for charging the vehicle, characterised in that the electric vehicle charger (1) includes at least one sensor (5) adapted to detect the presence or absence of a vehicle (4) or vehicles in the vicinity of the electric vehicle charger (1).

Embodiment 2. An electric vehicle charger according to embodiment 1, wherein the at least one sensor (5) is arranged in the housing (2) of the electric vehicle charger (1).

Embodiment 3. An electric vehicle charger according to embodiment 1 or 2, wherein the at least one sensor (5) includes a non-contact distance sensor and/or preferably has the form of a Light Detection and Ranging (LIDAR) device.

Embodiment 4. An electric vehicle charger according to any one of the preceding embodiments, wherein the housing (2) of the electric vehicle charger (1) is adapted to be arranged on or in an outer wall (7) of a building.

Embodiment 5. An electric vehicle charger according to embodiment 4, wherein the housing (2) is adapted to provide electrical connection through the outer wall (7) of the building from a power supply (8) inside the building to an electric vehicle (4) parked outside the building.

Embodiment 6. An electric vehicle charger according to embodiment 5, wherein the housing (2) of the electric vehicle charger (1) includes a first tubular part (9) preferably being generally cylindrical and having a first maximum cross-sectional dimension (D) and a second tubular part (10) preferably being generally cylindrical and having a second maximum cross-sectional dimension (d), wherein the first maximum cross-sectional dimension (D) is substantially larger than the second maximum cross-sectional dimension (d), wherein the first tubular part (9) houses charger control electronics (11) and possibly a standard socket (12) for insertion of a plug (13) of an electric vehicle charging cable (14), and wherein the second tubular part (10) houses an electric cable (15) adapted to connect the power supply (8) inside the building to the electric vehicle charger (1).

Embodiment 7. An electric vehicle charger according to any one of the preceding embodiments, wherein the electric vehicle charger (1) includes a cable rail (16) adapted to be arranged in a groove (17) of a pavement (18) so that the cable rail (16) is flush with a surface (19) of the pavement (18), wherein the cable rail (16) forms an inner cable receiving channel (20) being open in upward direction for insertion of an electric vehicle charging cable (14), wherein the inner cable receiving channel (20) has a maximum width (W) between inner walls (21) of the inner cable receiving channel (20), wherein the inner walls (21) are provided with respective restrictions (22) at upper edges thereof, and wherein a restricted insertion space (23) is formed between the restrictions (22) and has a minimum width (w) being smaller than the maximum width (W) between the inner walls (21) of the inner cable receiving channel (20).

Embodiment 8. An electric vehicle charger according to embodiment 7, wherein the restrictions (22) formed at the upper edges of the inner walls (21) are flexible.

Embodiment 9. An electric vehicle charger according to embodiment 7 or 8, wherein each upper edge of the inner walls (21) of the inner cable receiving channel (20) are provided with a number of possibly flexible, layered restrictions (22) arranged above each other.

Embodiment 10. A system for monitoring of parking spaces and for charging of electric vehicles (4), the system including a number of electric vehicle chargers (1) according to any one of the preceding embodiments, wherein each electric vehicle charger (1) is adapted to communicate with a cloud based server, wherein a number of mobile devices provided with a dedicated app may communicate with the cloud based server, wherein the system by means of the dedicated app may provide information to users about available free parking spaces (3), and wherein the system by means of the dedicated app may allow users to control charging of electric vehicles (4) by means of the electric vehicle chargers (1).

Embodiment 11. An electric vehicle charger (1) having a housing (2) and being adapted to be arranged at a roadside and/or at a parking space (3), the electric vehicle charger (1) being adapted to provide electrical connection to an electric vehicle (4) for charging the vehicle, **characterised in that** the housing (2) of the electric vehicle charger (1) is adapted to be arranged in an outer wall (7) of a building, and in that the housing (2) is adapted to provide electrical connection through the outer wall (7) of the building from a power supply (8) inside the building to an electric vehicle (4) parked outside the building.

Embodiment 12. An electric vehicle charger according to embodiment 11, wherein the housing (2) of the electric vehicle charger (1) includes a tubular part (9) being generally cylindrical, wherein the tubular part (9) houses charger control electronics (11) and a socket (12) for insertion of a plug (13) of an electric vehicle charging cable (14), and wherein an electric cable (15) is adapted to be arranged to connect the power supply (8) inside the building to the electric vehicle charger (1).

Embodiment 13. An electric vehicle charger according to embodiment 12, wherein the generally cylindrical tubular part (9) is adapted to be fixed in a generally cylindrical hole in an outer part of the outer wall (7).

Embodiment 14. An electric vehicle charger according to embodiment 12 or 13, wherein the electric cable (15) is adapted to extend through an inner part of the outer wall (7) at a lower level than a level of the generally cylindrical tubular part (9).

Embodiment 15. An electric vehicle charger according to any one of the embodiments 12 to 14, wherein the housing (2) and the socket (12) are adapted to be arranged at least substantially flush with an outer surface of the outer wall (7) of the building.

Embodiment 16. An electric vehicle charger according to any one of the embodiments 11 to 15, wherein the electric vehicle charger (1) includes a cable rail (16) adapted to be arranged in a groove (17) of a pavement (18) so that the cable rail (16) is at least substantially flush with a surface (19) of the pavement (18), wherein the cable rail (16) forms an inner cable receiving channel (20) being open in upward direction for insertion of an electric vehicle charging cable (14), wherein the inner cable receiving channel (20) has a maximum width (W) between inner walls (21) of the inner cable receiving channel (20), wherein the inner walls (21) are provided with respective restrictions (22) at upper edges thereof, and wherein a restricted insertion space (23) is formed between the restrictions (22) and has a minimum width (w) being smaller than the maximum width (W) between the inner walls (21) of the inner cable receiving channel (20).

Embodiment 17. An electric vehicle charger according to embodiment 16, wherein the restrictions (22) formed at the upper edges of the inner walls (21) are flexible.

Embodiment 18. A method of installing an electric vehicle charger (1) at a roadside and/or at a parking space (3) in order to provide electrical connection to an electric vehicle (4) for charging the vehicle, the electric vehicle charger (1) having a housing (2), **characterised by** providing a first hole in an outer part of an outer wall (7) of a building, by arranging the housing (2) of the electric vehicle charger (1) in the first hole in the outer wall (7) of the building, and by arranging the housing (2) to provide electrical connection through the outer wall (7) of the building from a power supply (8) inside the building to an electric vehicle (4) parked outside the building.

Embodiment 19. A method of installing an electric vehicle charger according to embodiment 18, including providing the first hole in the outer part of the outer wall (7) by employing a hole saw from an outside of the outer wall (7).

Embodiment 20. A method of installing an electric vehicle charger according to embodiment 18 or 19, including drilling a second hole from an inside of an inner part of the outer wall (7), by starting drilling the second hole from a lower level than a level of the first hole, and including inserting an electric cable (15) through the second hole and thereby connecting the power supply (8) inside the building to the electric vehicle charger (1).

## Claims

1. An electric vehicle charger (1) having a housing (2) and being adapted to be arranged at a roadside and/or at a parking space (3), the electric vehicle charger (1) being adapted to provide electrical connection to an electric vehicle (4) for charging the vehicle, wherein the electric vehicle charger (1) includes a cable rail (16) adapted to be arranged in a groove (17) of a pavement (18) so that the cable rail (16) is at least substantially flush with a surface (19) of the pavement (18), wherein the cable rail (16) forms an inner cable receiving channel (20) being open in upward direction for insertion of an electric vehicle charging cable (14), and wherein the inner cable receiving channel (20) has a maximum width (W) between inner walls (21) of the inner cable receiving channel (20), **characterised in that** the inner walls (21) are provided with respective restrictions (22) at upper edges thereof, and **in that** a restricted insertion space (23) is formed between the restrictions (22) and has a minimum width (w) being smaller than the maximum width (W) between the inner walls (21) of the inner cable receiving channel (20).

2. An electric vehicle charger according to claim 1, wherein the restrictions (22) formed at the upper edges of the inner walls (21) are flexible.

3. An electric vehicle charger according to claim 1 or 2, wherein the minimum width (w) of the restricted insertion space (23) formed between the restrictions (22) is less than 0.8 times, preferably less than 0.7 times and most preferred less than 0.6 times the maximum width (W) between the inner walls (21) of the inner cable receiving channel (20).

4. An electric vehicle charger according to any one of the preceding claims, wherein the restrictions (22) formed at the upper edges of the inner walls (21) have the form of flexible flaps adapted to bend flexibly between a straight position in which the flaps extend at least substantially in the direction of each other and a bent position in which at least a part of the flaps are bent at least partly up or down in relation to the upward open inner cable receiving channel (20).

5. An electric vehicle charger according to claim 4, wherein the cable rail (16) includes a bottom wall and two opposed side walls, each side wall generally having a minimum wall thickness, and wherein each flexible flap has a maximum wall thickness being smaller than, preferably less than 0.6 times, preferably less than 0.5 times and most preferred less than 0.4 times the minimum wall thickness of each side wall.

6. An electric vehicle charger according to any one of the preceding claims, wherein the entire cable rail (16) is formed from an at least slightly flexible material, such as rubber.

7. An electric vehicle charger according to any one of the preceding claims, wherein the housing (2) of the electric vehicle charger (1) is arranged in an outer wall (7) of a building, an in that the housing (2) is adapted to provide electrical connection through the outer wall (7) of the building from a power supply (8) inside the building to an electric vehicle (4) parked outside the building.

8. An electric vehicle charger according to claim 7, wherein the housing (2) of the electric vehicle charger (1) includes a tubular part (9) being generally cylindrical, wherein the tubular part (9) houses charger control electronics (11) and a socket (12) for insertion of a plug (13) of an electric vehicle charging cable (14), and wherein an electric cable (15) is arranged to connect the power supply (8) inside the building to the electric vehicle charger (1).

9. A method of charging an electric vehicle by providing electrical connection to the electric vehicle (4) by means of an electric vehicle charger (1) having a housing (2) and being arranged at a roadside and/or at a parking space (3), the electric vehicle charger (1) including a cable rail (16) arranged in a groove (17) of a pavement (18) so that the cable rail (16) is at least substantially flush with a surface (19) of the pavement (18), wherein the cable rail (16) forms an inner cable receiving channel (20) being open in upward direction for insertion of an electric vehicle charging cable (14), wherein the inner cable receiving channel (20) has a maximum width (W) between inner walls (21) of the inner cable receiving channel (20), **characterised in that** the inner walls (21) are provided with respective restrictions (22) at upper edges thereof, **in that** a restricted insertion space (23) is formed between the restrictions (22) and has a minimum width (w) being smaller than the maximum width (W) between the inner walls (21) of the inner cable receiving channel (20), **in that**, before each charging session of an electric vehicle, an electric vehicle charging cable (14) having a diameter (D) being greater than the minimum width (w) of the restricted insertion space (23) formed between the restrictions (22) is inserted into the inner cable receiving channel (20) of the cable rail (16) by flexing in downward direction the restrictions (22) formed at the upper edges of the inner walls (21), and **in that**, after each charging session of an electric vehicle, the electric vehicle charging cable (14) is removed from the inner cable receiving channel (20) of the cable rail (16) by flexing in upward direction the restrictions (22).

10. A method of charging an electric vehicle according to claim 9, whereby the electric vehicle charging cable (14) is inserted into the inner cable receiving channel (20) of the cable rail (16) by firstly positioning at least a part of the electric vehicle charging cable (14) above a part of the cable rail (16), and by subsequently pressing one part of the electric vehicle charging cable (14) after the other into the inner cable receiving channel (20), thereby flexing in downward direction the restrictions (22) formed at the upper edges of the inner walls (21) of the inner cable receiving channel (20) only at a part of the cable rail (16) at a time, and whereby the electric vehicle charging cable (14) is removed from the inner cable receiving channel (20) of the cable rail (16) by firstly drawing in upward direction the electric vehicle charging cable (14) at one end of the cable rail (16), thereby flexing in upward direction the restrictions (22) formed at the upper edges of the inner walls (21) of the inner cable receiving channel (20) only at a part of the cable rail (16) at a time, until the entire electric vehicle charging cable (14) has been removed from the inner cable receiving channel (20).

11. A method of installing an electric vehicle charger (1) at a roadside and/or at a parking space (3) in order to provide electrical connection to an electric vehicle (4) for charging the vehicle, the electric vehicle charger (1) having a housing (2), wherein the electric vehicle charger (1) includes a cable rail (16), whereby the method includes the step of arranging the cable rail (16) in a groove (17) of a pavement (18) so that the cable rail (16) is at least substantially flush with a surface (19) of the pavement (18), wherein the cable rail (16) forms an inner cable receiving channel (20) being open in upward direction for insertion of an electric vehicle charging cable (14), **characterised by** cutting the groove (17) directly through only a top part of the existing pavement (18) formed by different pavement materials, such as cobbles and concrete slabs, by using a cable rail (16) formed from an at least slightly flexible material, such as rubber, and by fixing the cable rail (16) in the groove (17) of the pavement (18) by means of glue.
